# EUROPEAN PATENT SPECIFICATION

(11) **EP 3 567 263 B1**
(45) Date of publication and mention of the grant of the patent: **22.11.2023**
(21) Application number: 19173320.3
(22) Date of filing: 08.05.2019
(51) Int. Cl.: F16B 2/24

(54) **CLIP FOR CATENARY CABLE**
KLEMME FÜR OBERLEITUNGSKABEL
PINCE POUR CÂBLE DE CATÉNAIRE

(30) Priority: 08.05.2018 US 201862668622 P
(43) Date of publication of application: 13.11.2019
(73) Proprietor: Erico International Corporation, Solon, OH 44139 (US)
(72) Inventor: WILSON, Eric J., Solon, OH 44139 (US); LAUGHLIN, R. Scott, Middlefield, OH 44062 (US)
(74) Representative: Barker Brettell LLP

(56) References cited:
- EP-A1- 0 678 635
- WO-A1-2017/043965
- US-A- 4 958 792
- US-A- 5 102 074
- US-A- 5 533 696
- US-A1- 2010 264 277
- US-A1- 2016 000 433

## Description

### BACKGROUND

In many applications, catenary cable(s) can be used to support lights, hooks, or other objects relative to building structures. Correspondingly, it may be useful to provide devices that allow for relatively quick and secure attachment of objects to catenary cables. US 5 533 696 A describes a conduit support clip with gripping spring legs.

### SUMMARY

An embodiment of the disclosure provides a clip for attaching an object to a catenary cable in accordance with appended claim 1. A further embodiment of the disclosure is a method of securing an object to a catenary cable using one or more clips in accordance with appended claim 14. Preferred embodiments are defined in the dependent claims.

### BRIEF DESCRIPTION OF THE DRAWINGS

The accompanying drawings, which are incorporated in and form a part of this specification, illustrate embodiments of the invention and, together with the description, serve to explain the principles of embodiments of the invention:
FIGS. 1A and 1B are isometric views of a clip for catenary cable according to an embodiment of the invention, with the clip in an open configuration;
FIG. 1C is an isometric view of the clip of FIGS. 1A and 1B engaged with a hanging component;
FIGS. 2A and 2B are additional isometric views of the clip of FIGS. 1A and 1B, with the clip in the open configuration;
FIG. 2C is a side elevation view of the clip of FIGS. 1A and 1B, in the open configuration;
FIGS. 3A through 3D are, respectively, front and rear elevation views, an isometric view, and a side elevation view of the clip of FIGS. 1A and 1B, with the clip in a closed configuration;
FIGS. 4A through 4C are side elevation views of the clip of FIGS. 1A and 1B during installation of the clip on a cable;
FIG. 5 is an isometric view of support system with multiple clips according to an embodiment of the invention; and
FIGS. 6A and 6B are side elevation views of another clip not covered by the present invention.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways, if they do not depart from the scope of the invention as defined in the appended claims. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

Some examples below describe movement of various components or features relative to other components or features. Unless otherwise specified or limited, the described movement is provide from an example, non-exclusive perspective and inherently includes a corresponding inverted movement. For example, movement of a first component towards a second component inherently includes movement of the second component towards the first component, depending on perspective. Accordingly, for example, description below of movement of the first component towards the second component inherently includes movement of the second component towards the first component.

The following discussion is presented to enable a person skilled in the art to make and use embodiments of the invention. Various modifications to the illustrated embodiments will be readily apparent to those skilled in the art, and the generic principles herein can be applied to other embodiments and applications without departing from embodiments of the invention. Thus, embodiments of the invention are not intended to be limited to embodiments shown, but are to be accorded the widest scope consistent with the scope of the invention as defined in the appended claims. The following detailed description is to be read with reference to the figures, in which like elements in different figures have like reference numerals. The figures, which are not necessarily to scale, depict selected embodiments and are not intended to limit the scope of embodiments of the invention. Skilled artisans will recognize the examples provided herein have many useful alternatives and fall within the scope of embodiments of the invention.

As noted above, in some contexts, it may be useful to attach objects to a catenary cable (or other similar components). Embodiments of the invention can be useful for this purpose, and others. For example, embodiments of the invention can be used to quickly attach wires, hooks, or other objects to a catenary cable of standard dimensions, in order to support the objects from the cable. In some configurations, embodiments of the invention can also be used to support a catenary cable relative to another structure.

Generally, clips according to some embodiments of the invention can be formed from single piece bodies that are configured to have open configurations, in which they can receive a catenary cable, and closed configurations, in which they are secured around the catenary cable. In some embodiments, a single-piece clip can be formed from spring steel using progressive die stamping.

The clips according to the invention can be moved between open and closed configurations, without necessarily requiring the use of tools. For example, some clips according to the invention are configured to be manually squeezed from the open configuration to the closed configuration, in order to secure the clip around a catenary cable. In some embodiments, the clips can also be manually released from the closed configuration, and can thereupon resiliently return to the open configuration.

In some embodiments, additional features can help to secure a clip onto a catenary cable. One or more fingers are formed to extend into a hook portion of a clip. Closing the clip around a catenary cable urges the fingers into the cable to further secure the clip to the cable. In some embodiments, for example, one or more fingers can be urged to penetrate slightly into a cable, to secure a clip against movement axially along the cable. In some embodiments, opposing fingers can be cooperatively urged into a cable (e.g., by a single clip-closing motion), in circumferential or other alignment, to secure the cable within the clip.

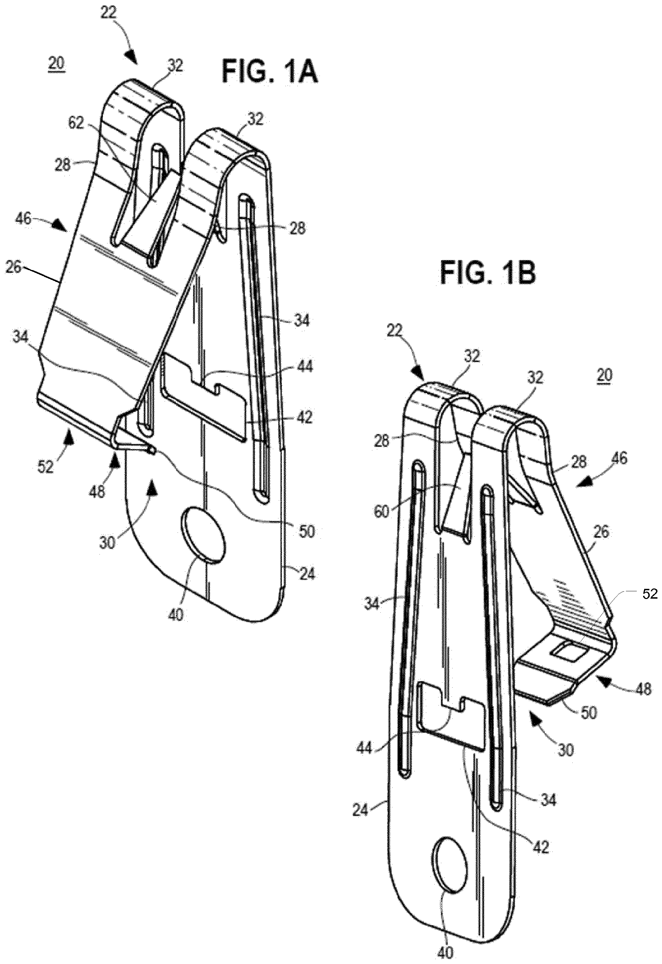

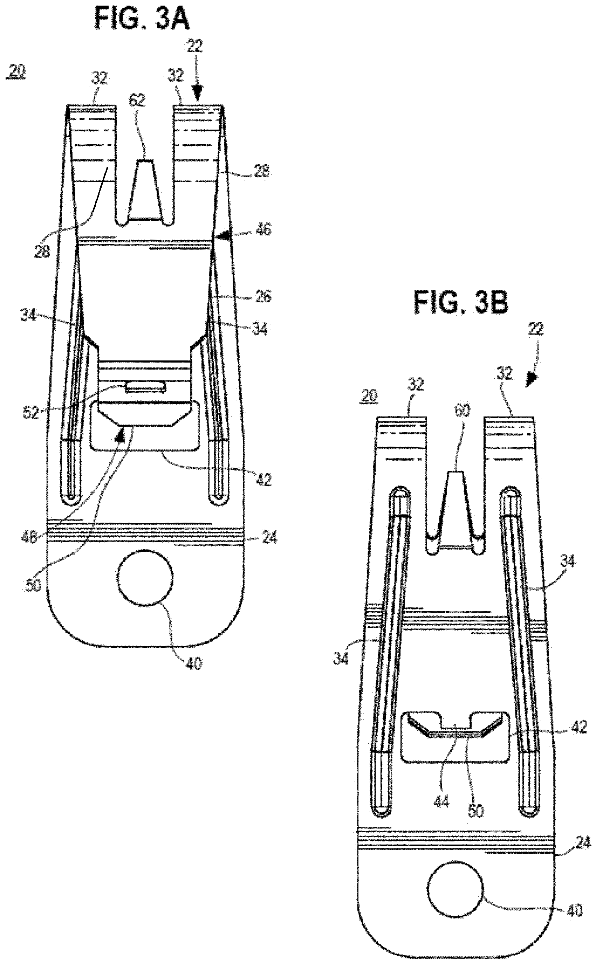

FIGS. 1A through 3D illustrate an example clip 20 for use with a catenary cable or other similar objects, according to an embodiment of the invention. In FIGS. 1A through 2C, the clip 20 is illustrated in an open configuration, as may be useful for installation of the clip 20 on a catenary cable (not shown in FIGS. 1A-3D). In FIGS. 3A through 3D, the clip 20 is illustrated in a closed configuration, as may be useful to secure the clip 20 in place on a catenary cable.

In some embodiments, a clip can be formed from spring steel. For example, the clip 20 is illustrated as an integrally formed spring-steel stamping. In other embodiments, however, other configurations are possible.

Referring in particular to FIGS. 1A and 1B, in the embodiment illustrated, the clip 20 is integrally formed to include a hook portion 22. The hook portion 22 is configured to receive a catenary cable, in order to attach one or more objects (e.g., suspended an object from) the catenary cable. Correspondingly, the hook portion 22 can be sized, in different embodiments, to receive a particular expected diameter of a catenary cable (e.g., a standard 6 mm cable). In some embodiments, a hook portion can be configured to reliably receive and secure cable with a range of diameters.

To attach objects to the clip 20 and to secure the clip 20 to a cable, a load arm 24 and a locking arm 26 extend from opposite sides of the hook portion 22. In different embodiments, load arms and locking arms can extend from a relevant hook portion with any variety of angular orientations. In the embodiment illustrated, the load arm 26 is configured as a generally tangential extension of the hook portion 22. In contrast, the locking arm 26 angles away from an opposite side of the hook portion 22, at bends 28, to angle away from the load arm 24 when the clip 20 is in the open configuration. Correspondingly, a relatively wide-mouthed opening 30 is defined between the load and locking arms 24, 26, tapering inwardly toward the diameter of the hook portion 22.

In order to move the clip 20 between open and closed configurations, as also discussed below, at least one of the load or the locking arms 24, 26 is generally configured to be flexible relative to the hook portion 22. In the embodiment illustrated, the load and locking arms 24, 26 both extend from shared parallel bands 32 that also form the hook portion 22. Usefully, the configuration of the bands 32 can provide an appropriate balance between flexibility and strength for some manually-installed catenary applications. In other embodiments, however, other configurations are possible. For example, a hook portion can be formed without bands, with bands that extend into one of a load or locking arm but not into the other, and so on.

In some embodiments, one of a load arm or a locking arm can be configured to be more flexible than the other, relative to a hook portion or other part of a clip. In the embodiment illustrated, for example, a set of reinforcement ribs 34 extend partly along opposite sides of the load arm 24 and partly onto the bands 32. Accordingly, the load arm 24 exhibits a greater stiffness against bending than the locking arm 26, and applying pressure to move the arms 24, 26 together may tend to flex the bands 32 to a greater extent near (or on) the locking arm 26 than near (or on) the load arm 24. This arrangement may be useful, for example, in order to provide a more stable mounting arrangement for objects to be attached to the clip 20. For example, with an object hanging from the load arm 24, it may be easier or otherwise more appropriate to move the locking arm 26 towards the load arm 24 than vice versa. In other embodiments, however, other configurations are possible.

In order to attach an object to the clip 20, the load arm 24 includes an attachment opening configured as a round aperture 40 that extends fully through the load arm 24. The round aperture 40 can be used to attach an object in various ways, including through insertion of a rivet, an S-hook, or another fastener through the aperture 40. In this way, for example, a wide variety of objects can be secured to the clip 20, including mid-support cables, drop wire, other types of supports (e.g., J-hooks), or other objects. In other embodiments, however, attachment features other than an attachment opening can be provided.

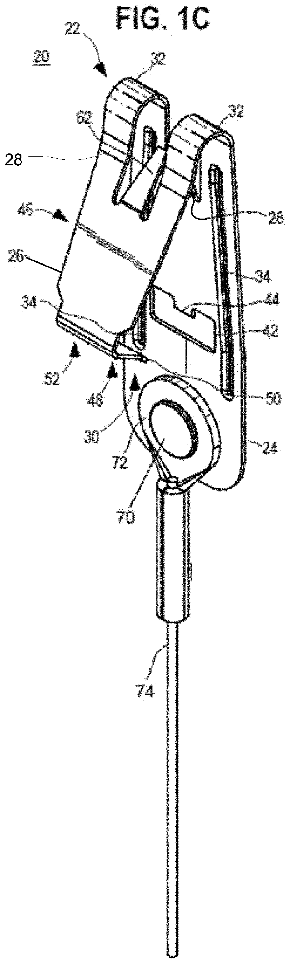

In some conventional arrangements, an object to be secured to a catenary cable by a catenary clip is secured to a locking set screw of the catenary clip. This may require the object to be rotated along with the set screw during installation, including to avoid the problems of kinked drop wires. Usefully, in some contexts, using the aperture 40 to attach an object to the clip 20 can eliminate the need to rotate the object in this way. As also discussed below, this may result in improved ability to pre-fabricate hanging arrangements before securing them to catenary cable. As illustrated in FIG. 1C, for example, a rivet 70 can be secured at the aperture 40 (not shown in FIG. 1C) to secure an eyelet 72 and an associated drop wire 74 to the clip 20. With this arrangement, the clip 20 can be moved into alignment for installation and secured around a catenary cable (e.g., as discussed below) without the need to rotate an object supported by the drop wire 74.

Generally, load and locking arms of a clip according to the invention can include respective complementary engagement features that are configured to engage each other in order to secure the clip around a cable. In the embodiment illustrated, for example, the load arm 24 includes an opening configured as a substantially rectangular aperture 42, with a locking feature configured as a rectangular tab 44 that extends into the aperture 42. Correspondingly, the locking arm 26 includes a spring portion 46 extending from the hook portion 22, and an engagement feature configured as a locking portion 48 that extends at an angle from the spring portion 46. In the embodiment illustrated, the locking portion 48 extends at a substantially 90° angle from the spring portion 46. To assist with locking the clip 20 in the closed configuration, the locking portion 48 includes an end tab formed as an angled end 50 and a locking slot 52 that extends from the locking portion 48 onto the spring portion 46.

In some embodiments, other beneficial features can be included. For example, in some embodiments, cable-engagement features can be provided in order to help secure a cable within a hook portion. A cable-engagement feature includes one or more fingers that are configured to be urged into a cable to secure a clip thereto. In the embodiment illustrated, for example, the load and locking arms 24, 26 include cable-engagement features configured as fingers 60, 62. Generally, as also discussed below, the fingers 60, 62 are configured to secure a cable against removal from the hook portion 22 when the clip 20 is in the open configuration, and to secure a cable against sliding within the hook portion 22 when the clip is in the closed configuration.

In different embodiments, cable-engagement fingers can be configured in a variety of ways, including as curved, angled, tapered, hooked, or other extensions. In the embodiment illustrated, both of the fingers 60, 62 are configured as relatively rigid, tapered extensions of the respective arms 24, 26. Further, the fingers 60, 62 angle towards each other from opposing sides of the hook portion 22. Each of the fingers 60, 62 is somewhat flexible, so as to bend away from an expected diameter 64 of a cable (as also discussed below). Each is also substantially rigid against bending within the plane of the associated load arm 24 or locking arm 26, and is substantially rigid along its axis, in order to prevent buckling.

In the embodiment illustrated, the finger 60 extends inwardly at a somewhat sharper angle from the load arm 24 than the finger 62 does from the spring portion 46 of the locking arm 26. This may be useful, for example, to dispose the finger 62 to move more substantially relative to a cable as the locking arm 26 is moved towards the load arm 24 to close the clip.

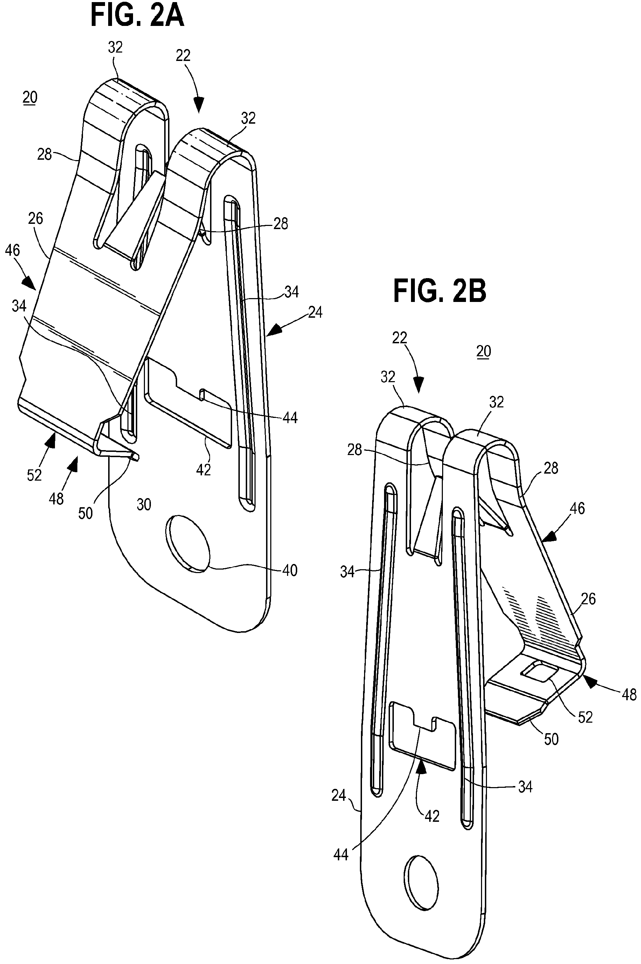

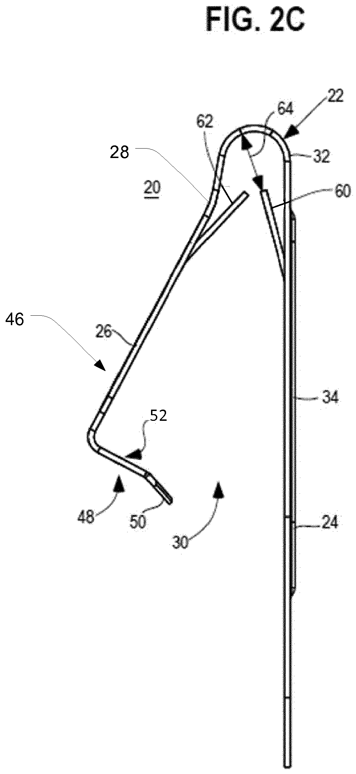

As also noted above, the fingers 60, 62 are configured to resiliently secure a cable within the hook portion 22 of the clip 20. As illustrated in FIG. 2C in particular, with the clip 20 in the open configuration, each of the fingers 60, 62 extends inward into the opening 30, with the narrow ends of the fingers 60, 62 substantially aligned with, or slightly outside of, the expected diameter 64 of a cable. Accordingly, in some applications, a cable with a diameter equal to or less than the diameter 64 can be seated manually within the clip 20. For example, manual movement of the clip 20 onto a cable can urge the fingers 60, 62 outward for passage of the cable into the hook portion 22, and the fingers 60, 62 can thereafter spring back toward the orientation of FIG. 2C, to secure the cable within the hook portion 22. Further, in the illustrated embodiment, the fingers 60, 62 can allow axial movement of a cable within the hook portion 22, while the clip 20 is in the open configuration, as may be useful for adjustment of the clip 20 on the cable.

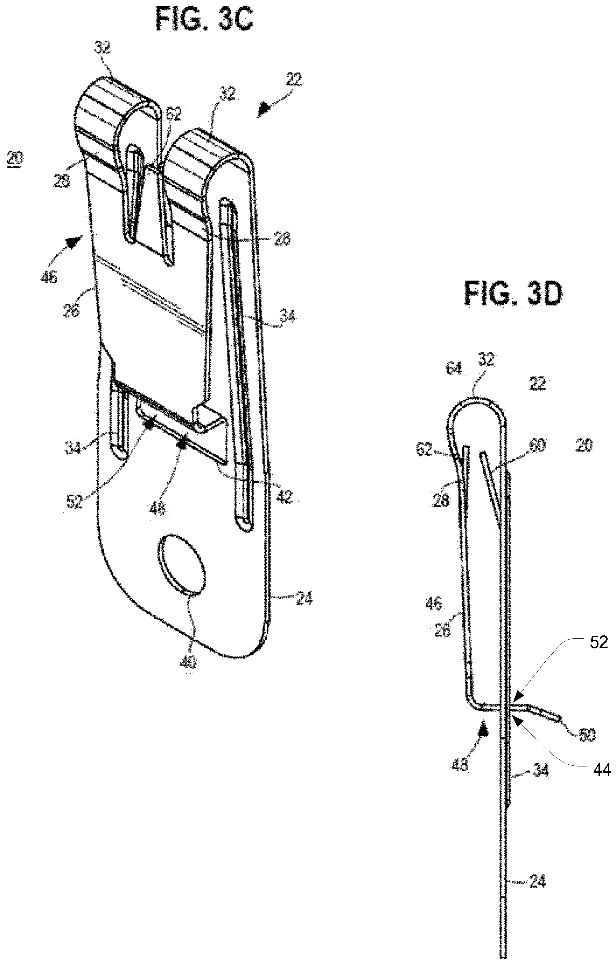

As also noted above, FIGS. 3A through 3D illustrate the clip 20, in a closed configuration. To move the clip 20 from the open configuration (see, e.g., FIGS. 1A through 2C) to the closed configuration, pressure can be applied to urge the load and locking arms 24, 26 together. With sufficient pressure, the hook portion 22 and the spring portion 46 of the locking arm 26 flex relative to the load arm 24 so that the locking portion 48 of the locking arm 26 passes partly into the aperture 42 on the load arm 24. With sufficient insertion, the tab 44 on the load arm 24 can be seated within the locking slot 52 (see, e.g., FIG. 3C), in order to secure the locking portion 48 within the aperture 42 and, thereby, to secure the clip 20 in the closed configuration.

In some embodiments, the clip 20 can be moved to or from the closed configuration manually and without tools. In this regard, for example, as manually-applied pressure closes the opening 30, the angled end 50 can engage the tab 44 and thereby flex the locking portion 48 outwardly (i.e., downwardly in the orientation illustrated) to clear the tab 44. Once clear, the locking portion 48 can then spring resiliently into the load arm 24 to secure the tab 44 within the locking slot 52. Similarly, the angled end 50 can be manually engaged in order to move the locking portion 48 clear of the tab 44, allowing the spring portion 46 to resiliently return the clip 20 to the open configuration.

In other embodiments, other configurations are possible. For example, similar tabs and openings arranged in other ways on a clip can operate similarly to allow locking and loading arms of the clip to be secured together.

As illustrated in FIG. 3D in particular, when the clip 20 is in the closed configuration, the load and locking arms 24, 26 extend substantially in parallel to each other. Further, the load arm 26 is configured to hang substantially straight downwardly, relative to gravity, when the clip 20 is closed and loaded. Collectively, this configuration can provide for a readily installed and reliably secure clip, with significant load capacity. In other embodiments, however, other configurations are possible.

In some embodiments, moving a clip to a closed configuration can help to secure a cable against movement relative to the clip as well as securing the cable generally within the clip. For example, closing the clip 20 can generally close the hook portion 22 around a cable received therein, thereby effectively clamping the cable within the clip 20. Further, as illustrated in FIG. 3D in particular, moving the clip 20 to the closed configuration urges the free ends of the fingers 60, 62 into the interior of the expected diameter 64 of a cable. With a cable within the hook portion 22, the fingers 60, 62 can accordingly be urged into the cable, to firmly secure the clip against radial or axial movement. In some embodiments, the fingers 60, 62 can be urged past a resting (i.e., nominal) outer diameter of the cable, so that the free ends of the fingers 60, 62 somewhat deform, or penetrate into, the cable to provide particularly secure engagement.

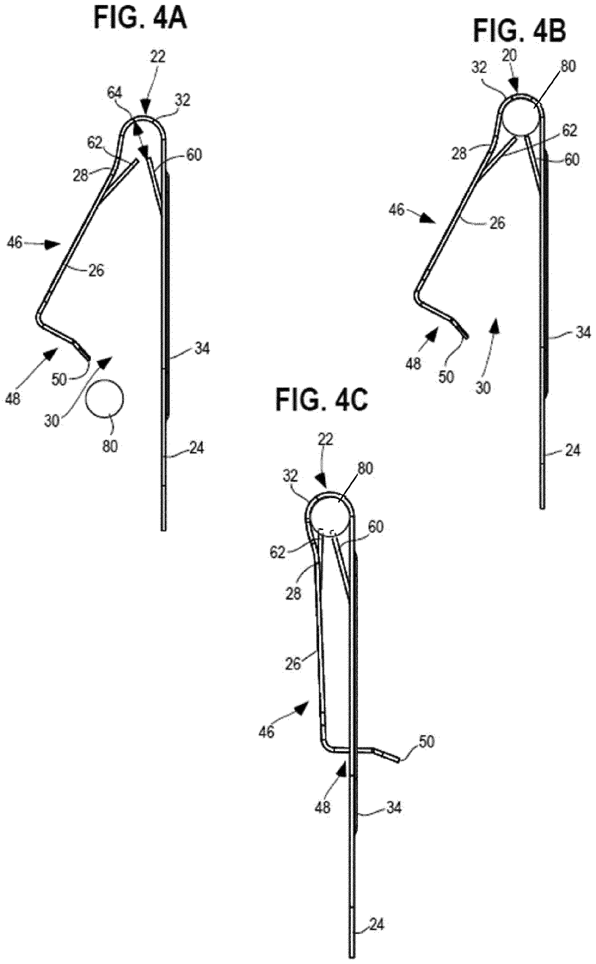

FIGS. 4A-4C illustrate an example method of installing the clip 20 on a cable 80. Generally, in order to attach the clip 20 to the cable 80, the cable 80 can be aligned with the opening 30 and the clip 20 pulled downwardly, to move the cable upward between the load and locking arms 24, 26. During this initial insertion of the cable 80 into the clip 20, the relatively large mouth of the opening 30, such as may be enabled by a spring-steel construction and the illustrated closing and locking mechanism, can be particularly useful. For example, due to the size of the opening 30, it may be relatively easy for a user to initially capture the cable 80 between the load and locking arms 24, 26. Further, the inward tapering of the opening 30 can thereafter naturally funnel the cable 80 towards the gap between the fingers 60, 62, and towards the hook portion 22 generally.

As noted above, urging the cable 80 between the fingers 60, 62 can cause the fingers 60, 62 to flex away from each other, so that the cable 80 is admitted into the hook portion 22 (see FIG. 4B). The fingers 60, 62 can then resiliently spring back to prevent the cable 80 from easily exiting the hook portion 22. In some embodiments, it may nonetheless be possible to remove a cable from the hook portion 22 by re-flexing the fingers 60, 62 or otherwise manipulating the load and locking arms 24, 26.

Also as noted above, with the cable 80 within the hook portion 22 and the clip 20 in the open configuration (see FIG. 4B), the fingers 60, 62 and the hook portion 22 may still provide sufficient clearance for axial movement of the clip 20 along the cable 80 (or vice versa). This may be useful, for example, in order to adjust the clip 20 relative to the cable 80, even after the cable 80 has been secured within the clip 20, so as to support a particular object (not shown) at a desired location along the cable 80.

With the cable 80 within the hook portion 22, the clip 20 can then be moved to the closed configuration. As illustrated in FIG. 4C in particular, and as also discussed above, moving the clip 20 to the closed configuration can tighten the hook portion 22 around the cable and can also urge the fingers 60, 62 into the cable 80, such as may cause the free ends of the fingers 60, 62 to penetrate into the cable 80 (e.g., by locally compressing the cable or by penetrating between strands of the cable). As a result, when in the closed configuration, the clip 20 can be relatively firmly secured at a particular axial location on the cable 80, with the fingers 60, 62 strongly resisting any movement of the clip 20 axially along the cable 80. In this way, for example, the clip 20 can be adjusted when open, then effectively locked when closed, to firmly secure a particular object at a particular location along the cable 80.

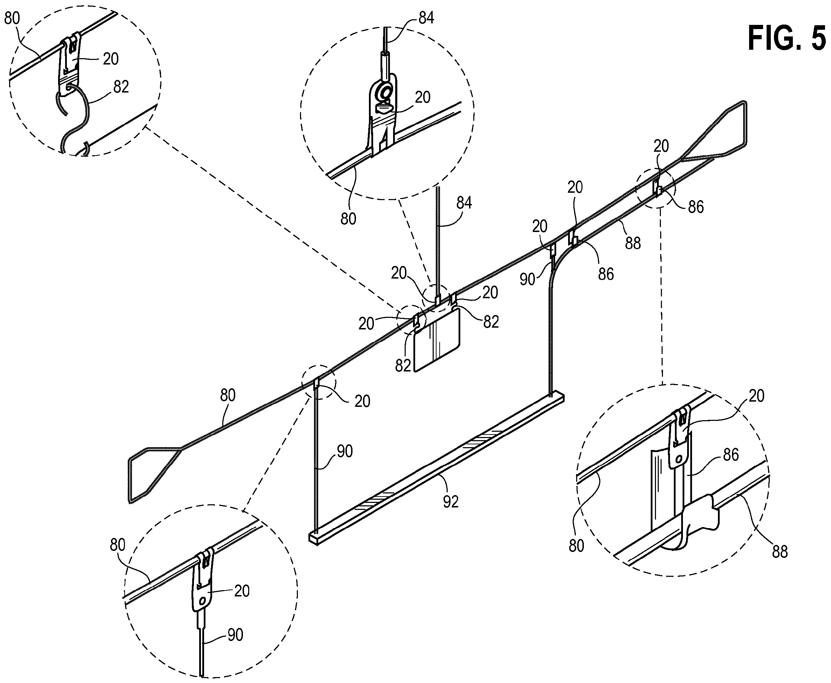

FIG. 5 illustrates certain example uses of the clip 20, with the cable 80 suspended as a catenary cable between building structures (not shown). A variety of other uses are also possible. As one illustrated example, two of the clips 20 can be used with S-hooks 82 to hang an information plate from the cable. Likewise, another of the clips 20 can be riveted to a support cable 84, then secured in an inverted orientation to the cable 80 in order for the support cable 84 to provide intermediate support for the catenary cable 80. Further, two of the clips 20 can be engaged with corresponding J-hooks 86 in order to support an electrical cable 88 that extends in parallel with the cable 80.

In some embodiments, clips according to embodiments of the invention can allow for pre-fabricated systems to be easily secured to cables. For example, as illustrated in FIG. 5, drop wires 90 can be riveted to two of the clips 20 (e.g., similarly to FIG. 1C) and also secured to a hanging light fixture 92. The clips 20 and the fixture 92 can then be lifted together and the clips 20 manually engaged with the cable 80, to hang the fixture 92 from the cable 80.

Usefully, as also noted above, because the drop wires 90 are not secured to set screws or other similar features on the clips 20, the drop wires 90 do not need to be rotated during installation of the clips 20 in order to avoid twisting of the drop wires 90. Further, in some arrangements, for example, a rivet used to secure the drop wires 90 can pivot freely relative to the clips 20, thereby generally providing flexibility with regard to certain movements of the clips 20 during installation. Particularly with the light fixture 92 (or another object) pre-attached to the drop wires 90 and the clips 20, this arrangement can allow for relatively easy and versatile installation of pre-fabricated systems. Further, with the light fixture 92 and other objects, the adjustability of the clips 20 relative to a cable when the clips 20 are in the open configuration, can allow the objects to be easily and accurately moved to a desired location even while the objects are fully supported by the cable.

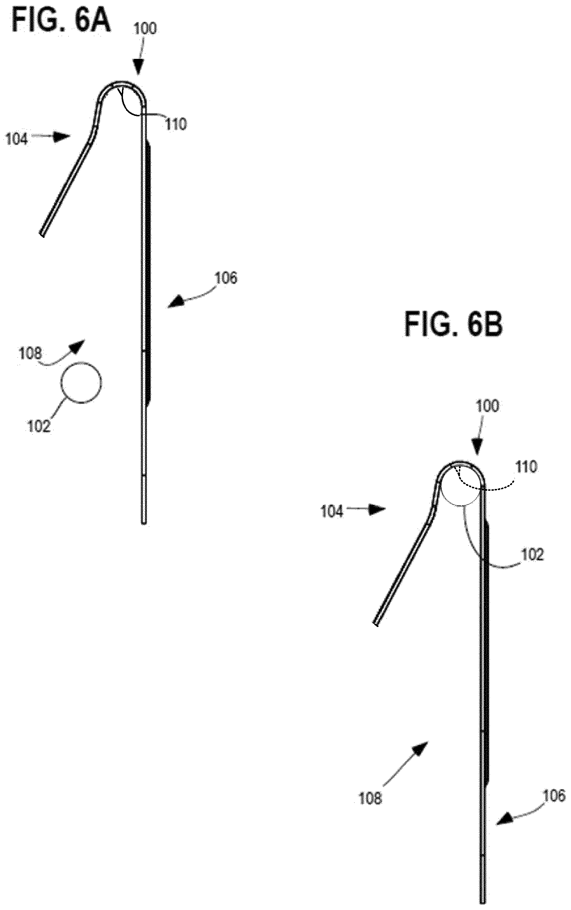

In other embodiments, other configurations are possible. For example, FIGS. 6A and 6B illustrate a clip 100 according to an embodiment of an invention, which is generally configured to secure an object (not shown in FIGS. 6A and 6B) to a cable 102. Similarly to other configurations described above, the clip 100 includes first and second arms 104, 106 that define an opening 108 to receive the cable 102. Further, the first and second arms 104, 106 can be flexed apart from each other to admit the cable 102, before resiliently springing back to the illustrated orientation with the cable 102 secured within the clip 100.

In some aspects, however, the clip 100 is configured to operate differently than other configurations described herein. For example, in contrast to the arms 24, 26 of the clip 20 (see, e.g., FIG. 1A), the arms 104, 106 are not necessarily configured to directly engage each other to secure the clip 100 to the cable 102. Instead, a finger 110 within the clip 100 is configured to be urged into, and thereby slightly compress, the cable 102, when the cable 102 is seated within the clip 100 and the arms 104, 106 resiliently close around the cable 102. In the embodiment illustrated, a single one of the fingers 110 is provided, configured as a barb-like feature extending inwardly near a top end of the clip 100.

In other embodiments, other configurations are possible. For example, a different number, location, or shape of fingers can be provided, the arms 104, 106 can be configured to engage each other similarly to the arms 24, 26 or otherwise, and so on. Similarly, one or more aspects of the clips 20, 100, or other examples discussed herein, can be exchanged or combined in various ways while still providing improvements over conventional clips.

Thus, embodiments of the invention provide an improved clip for attachment to cables. In some embodiments, clips according to the invention can provide for improved ease of installation, including through a relatively wide opening to receive a cable and a configuration that allows manual movement of the clips between open and closed configurations. Similarly, some clips according to the invention can allow for adjustment (e.g., axial sliding) of objects relative to a cable after the cable is engaged by the clip to support the object, while also providing selective locking of the clips against movement (e.g., axial sliding) on the cable.

The previous description of the disclosed embodiments is provided to enable any person skilled in the art to make or use the invention. Various modifications to these embodiments will be readily apparent to those skilled in the art, and the generic principles defined herein may be applied to other embodiments without departing from the scope of the invention as defined in the appended claims.

## Claims

1. A clip for attaching an object to a catenary cable, the clip comprising:
a single-piece body including:
a hook portion (22) configured to receive the catenary cable (80);
a load arm (24) extending from the hook portion (22) to engage the object;
a locking arm (26) extending from the hook portion (22); and
the hook portion (22) connecting the load arm (24) to the locking arm (26) with the load arm (24) and the locking arm (26) extending from the hook portion (22);
the single-piece body having an open configuration in which the load arm (24) and the locking arm (26) define an opening (30) to admit the catenary cable (80) into the hook portion (22);
the single-piece body having a closed configuration in which the locking arm (26) engages the load arm (24) to close the hook portion (22) around the catenary cable (80); and
wherein the hook portion (22) is configured to support the clip (20) relative to the catenary cable (80), with the catenary cable (80) seated against the hook portion (22), to support an object hanging from the load arm (24) relative to the catenary cable (80); and
wherein the single-piece body includes a finger (62) that extends into an interior of the hook portion (22), the finger (62) being configured to be urged into the catenary cable (80), to secure the catenary cable (80) within the hook portion (22), when the single-piece body is moved from the open configuration to the closed configuration.

2. The clip of Claim 1, wherein with the single-piece body in the closed configuration, the finger (62) extends past an outer perimeter of the catenary cable (80) and secures the clip (20) against sliding along the catenary cable (80) when the single-piece body is in the closed configuration.

3. The clip of claim 1 or claim 2, wherein the finger (62) is a first finger (62); and wherein the single-piece body further includes a second finger (60) that extends from the load arm (24), the second finger (60) being configured to be urged into the catenary cable (80), to secure the catenary cable (80) within the hook portion (22), when the single-piece body is moved from the open configuration to the closed configuration, and
optionally or preferably, wherein the first finger (62) extends from the locking arm (26) and the second finger (60) extends from the load arm (24).

4. The clip of claim 3, wherein the first and second fingers (62, 60) are configured to engage the catenary cable (80) in circumferential alignment with each other.

5. The clip of any of claims 3 through 4, wherein at least one of the first and second fingers (62, 60) extends into the hook portion (22), to secure the catenary cable (80) within the hook portion (22) when the single-piece body is in the open configuration.

6. The clip of claim 5, wherein the first and second fingers (62, 60) extend into the hook portion (22) from opposing sides of the hook portion (22).

7. The clip of any of the preceding claims, wherein the locking arm (26) includes a spring portion (46) extending from the hook portion (22) and a locking portion (48) extending at an angle from the spring portion (46), the locking portion (48) being configured to engage the load arm (24) to secure the single-piece body in the closed configuration, and
optionally or preferably, wherein a locking-arm engagement feature is integrally formed on the locking portion (48) and is configured to engage with a load-arm engagement feature that is integrally formed on the load arm (24), to secure the single-piece body in the closed configuration.

8. The clip of Claim 7, wherein the locking-arm engagement feature includes a locking-arm opening (52) in the locking portion (48) of the locking arm (26); and
wherein the load-arm engagement feature includes a load-arm protrusion (44) that is configured to extend into the locking-arm opening (52) to secure the single-piece body in the closed configuration.

9. The clip of Claim 8, wherein the load-arm protrusion (44) is formed as a tab that extends into a load-arm opening (42) in the load arm (24); and
wherein at least part of the locking portion (48) of the locking arm (26) extends through the load-arm opening (42) when the single-piece body is in the closed configuration.

10. The clip of any of the preceding claims, wherein the single-piece body is configured to be released from the closed configuration without the use of tools, and
optionally or preferably, wherein the locking-arm includes an angled end (50) configured to be manually engaged to release the load arm protrusion (44) from the locking-arm opening (52).

11. The clip of any of the preceding claims, wherein, the locking arm (26) extends substantially in parallel with the load arm (24) when the single-piece body is in the closed configuration; and
wherein the single-piece body is configured to be manually slid along the catenary cable (80) when in the open configuration, and is configured to be secured against sliding along the catenary cable (80) when in the closed configuration.

12. The clip of any of the preceding claims, wherein the hook portion (22) is at a first end of the clip (20) and the loading arm (24) extends away from the first end towards an opposing second end of the clip (20); and
wherein the clip (20) includes an attachment feature (40) at the second end of the loading arm (24) to attach the object thereto;
optionally or preferably the hook portion (22) is formed from parallel bands (32) connected to each of the load arm (24) and the locking arm (26).

13. The clip of claim 12, wherein the locking arm (26) engages the loading arm (24) at a location between the hook portion (22) and the attachment feature (40).

14. A method of securing an object to a catenary cable (80) using one or more clips (20), each of which clips (20) includes a single-piece body, the single-piece body including a hook portion (22) that is configured to receive the catenary cable (80), a load arm (24) that extends from the hook portion (22) to engage the object, and a locking arm (26) that extends from the hook portion (22) opposite the load arm (24), the method comprising, for each of the one or more clips:
inserting the catenary cable (80) into the hook portion (22) via an opening (30) provided between the load arm (24) and the locking arm (26) such that the catenary cable (80) is seated in the hook portion (22);
manually urging the locking arm (26) and the load arm (24) together to dispose the single-piece body in a closed configuration in which the hook portion (22) is closed around the catenary cable (80) to prevent removal of the single-piece body from the catenary cable (80); and
hanging the object from the load arm (24) such that the catenary cable (80) supports the object via the hook portion (22) of the clip (20);
wherein manually urging the single-piece body into the closed configuration causes at least one finger (62) of the single-piece body to be urged into the catenary cable (80), within the hook portion (22), to secure the clip (80) against axial sliding along the catenary cable (80).

## Patentansprüche

1. Klemme zum Befestigen eines Objekts an einem Oberleitungskabel, wobei die Klemme Folgendes umfasst:
einen einstückigen Körper, der Folgendes umfasst:
einen Hakenteil (22), ausgelegt zum Aufnehmen des Oberleitungskabels (80);
einen Lastarm (24), der sich vom Hakenteil (22) erstreckt, um in Eingriff mit dem Objekt zu kommen;
einen Verriegelungsarm (26), der sich vom Hakenteil (22) erstreckt; und
wobei der Hakenteil (22) den Lastarm (24) mit dem Verriegelungsarm (26) verbindet
wobei sich der Lastarm (24) und der Verriegelungsarm (26) vom Hakenteil (22) erstrecken;
wobei der einstückige Körper eine offene Auslegung aufweist, in der der Lastarm (24) und der Verriegelungsarm (26) eine Öffnung (30) definieren, um das Oberleitungskabel (80) in den Hakenteil (22) aufzunehmen;
wobei der einstückige Körper eine geschlossene Auslegung aufweist, in der der Verriegelungsarm (26) in Eingriff mit dem Lastarm (24) kommt, um den Hakenteil (22) um das Oberleitungskabel (80) zu schließen; und
wobei der Hakenteil (22) ausgelegt ist zum Stützen der Klemme (20) relativ zum Oberleitungskabel (80), wobei das Oberleitungskabel (80) am Hakenteil (22) anliegt, um ein Objekt, das am Lastarm (24) hängt, relativ zum Oberleitungskabel (80) zu stützen; und
wobei der einstückige Körper einen Finger (62) umfasst, der sich in ein Inneres des Hakenteils (22) erstreckt, wobei der Finger (62) dazu ausgelegt ist, in das Oberleitungskabel (80) gedrückt zu werden, um das Oberleitungskabel (80) innerhalb des Hakenteils (22) zu sichern, wenn der einstückige Körper von der offenen Auslegung in die geschlossene Auslegung bewegt wird.

2. Klemme nach Anspruch 1, wobei sich, mit dem einstückigen Körper in der geschlossenen Auslegung, der Finger (62) über einen äußeren Umfang des Oberleitungskabels (80) hinaus erstreckt und die Klemme (20) gegen Gleiten entlang des Oberleitungskabels (80) sichert, wenn der einstückige Körper in der geschlossenen Auslegung ist.

3. Klemme nach Anspruch 1 oder Anspruch 2, wobei der Finger (62) ein erster Finger (62) ist; und
wobei der einstückige Körper ferner einen zweiten Finger (60) umfasst, der sich vom Lastarm (24) erstreckt, wobei der zweite Finger (60) dazu ausgelegt ist, in das Oberleitungskabel (80) gedrückt zu werden, um das Oberleitungskabel (80) innerhalb des Hakenteils (22) zu sichern, wenn der einstückige Körper von der offenen Auslegung in die geschlossene Auslegung bewegt wird, und wobei sich, optional oder vorzugsweise, der erste Finger (62) vom Verriegelungsarm (26) erstreckt und sich der zweite Finger (60) vom Lastarm (24) erstreckt.

4. Klemme nach Anspruch 3, wobei der erste und der zweite Finger (62, 60) dazu ausgelegt sind, in umlaufender Ausrichtung miteinander mit dem Oberleitungskabel (80) in Eingriff zu kommen.

5. Klemme nach einem der Ansprüche 3 bis 4, wobei sich zumindest einer aus dem ersten und dem zweiten Finger (62, 60) in den Hakenteil (22) erstreckt, um das Oberleitungskabel (80) innerhalb des Hakenteils (22) zu sichern, wenn der einstückige Körper in der offenen Auslegung ist.

6. Klemme nach Anspruch 5, wobei sich der erste und der zweite Finger (62, 60) von einander gegenüberliegenden Seiten des Hakenteils (22) in den Hakenteil (22) erstrecken.

7. Klemme nach einem der vorhergehenden Ansprüche, wobei der Verriegelungsarm (26) einen Federteil (46), der sich vom Hakenteil (22) erstreckt, und einen Verriegelungsteil (48), der sich in einem Winkel vom Federteil (46) erstreckt, umfasst, wobei der Verriegelungsteil (48) dazu ausgelegt ist, in Eingriff mit dem Lastarm (24) zu kommen, um den einstückigen Körper in der geschlossenen Auslegung zu sichern, und wobei, optional oder vorzugsweise, ein Verriegelungsarm-Eingriffsmerkmal integral am Verriegelungsteil (48) ausgebildet ist und dazu ausgelegt ist, mit einem Lastarm-Eingriffsmerkmal in Eingriff zu kommen, das integral am Lastarm (24) ausgebildet ist, um den einstückigen Körper in der geschlossenen Auslegung zu sichern.

8. Klemme nach Anspruch 7, wobei das Verriegelungsarm-Eingriffsmerkmal eine Verriegelungsarmöffnung (52) im Verriegelungsteil (48) des Verriegelungsarms (26) umfasst; und
wobei das Lastarm-Eingriffsmerkmal einen Lastarmvorsprung (44) umfasst, der dazu ausgelegt ist, sich in die Verriegelungsarmöffnung (52) zu erstrecken, um den einstückigen Körper in der geschlossenen Auslegung zu sichern.

9. Klemme nach Anspruch 8, wobei der Lastarmvorsprung (44) als eine Nase ausgebildet ist, die sich in eine Lastarmöffnung (42) im Lastarm (24) erstreckt; und wobei sich zumindest ein Teil des Verriegelungsteils (48) des Verriegelungsarms (26) durch die Lastarmöffnung (42) erstreckt, wenn der einstückige Körper in der geschlossenen Auslegung ist.

10. Klemme nach einem der vorhergehenden Ansprüche, wobei der einstückige Körper dazu ausgelegt ist, ohne Verwendung von Werkzeugen aus der geschlossenen Auslegung freigegeben zu werden, und
wobei, optional oder vorzugsweise, der Verriegelungsarm ein angewinkeltes Ende (50) umfasst, das dazu ausgelegt ist, manuell in Eingriff gebracht zu werden, um den Lastarmvorsprung (44) aus der Verriegelungsarmöffnung (52) freizugeben.

11. Klemme nach einem der vorhergehenden Ansprüche, wobei sich der Verriegelungsarm (26) im Wesentlichen parallel mit dem Lastarm (24) erstreckt, wenn der einstückige Körper in der geschlossenen Auslegung ist; und
wobei der einstückige Körper dazu ausgelegt ist, manuell entlang des Oberleitungskabels (80) geschoben zu werden, wenn in der offenen Auslegung, und dazu ausgelegt ist, gegen Gleiten entlang des Oberleitungskabels (80) gesichert zu werden, wenn in der geschlossenen Auslegung.

12. Klemme nach einem der vorhergehenden Ansprüche, wobei der Hakenteil (22) an einem ersten Ende der Klemme (20) ist und sich der Lastarm (24) weg vom ersten Ende in Richtung eines gegenüberliegenden zweiten Endes der Klemme (20) erstreckt; und
wobei die Klemme (20) ein Befestigungsmerkmal (40) am zweiten Ende des Lastarms (24) umfasst, um das Objekt daran zu befestigen;
wobei, optional oder vorzugsweise, der Hakenteil (22) aus parallelen Bändern (32) gebildet ist, die sowohl mit dem Lastarm (24) als auch dem Verriegelungsarm (26) verbunden sind.

13. Klemme nach Anspruch 12, wobei der Verriegelungsarm (26) an einem Ort zwischen dem Hakenteil (22) und dem Befestigungsmerkmal (40) in Eingriff mit dem Lastarm (24) kommt.

14. Verfahren zum Sichern eines Objekts an einem Oberleitungskabel (80) unter Verwendung einer oder mehrerer Klemmen (20), wobei jede Klemme (20) einen einstückigen Körper umfasst, wobei der einstückige Körper einen Hakenteil (22), der ausgelegt ist zum Aufnehmen des Oberleitungskabels (80), einen Lastarm (24), der sich vom Hakenteil (22) erstreckt, um in Eingriff mit dem Objekt zu kommen, und einen Verriegelungsarm (26), der sich vom Hakenteil (22) gegenüber dem Lastarm (24) erstreckt, umfasst, wobei das Verfahren, für jede der einen oder mehreren Klemmen, Folgendes umfasst:
Einsetzen des Oberleitungskabels (80) in den Hakenteil (22) über eine Öffnung (30), die zwischen dem Lastarm (24) und dem Verriegelungsarm (26) bereitgestellt ist, sodass das Oberleitungskabel (80) im Hakenteil (22) sitzt;
manuelles Zusammendrücken des Verriegelungsarms (26) und des Lastarms (24), um den einstückigen Körper in einer geschlossenen Auslegung anzuordnen, in der der Hakenteil (22) um das Oberleitungskabel (80) geschlossen ist, um Entfernung des einstückigen Körpers vom Oberleitungskabel (80) zu verhindern; und
Anhängen des Objekts am Lastarm (24), sodass das Oberleitungskabel (80) das Objekt über den Hakenteil (22) der Klemme (20) stützt; wobei
manuelles Zusammendrücken des einstückigen Körpers in die geschlossene Auslegung zumindest einen Finger (62) des einstückigen Körpers veranlasst, in das Oberleitungskabel (80) gedrückt zu werden, innerhalb des Hakenteils (22), um die Klemme (80) gegen axiales Gleiten entlang des Oberleitungskabels (80) zu sichern.

## Revendications

1. Pince pour attacher un objet à un câble caténaire, la pince comprenant :
un corps en une seule pièce comprenant :
une partie crochet (22) conçue pour recevoir le câble caténaire (80) ;
un bras de charge (24) s'étendant à partir de la partie crochet (22) pour la mise en prise de l'objet ;
un bras de blocage (26) s'étendant à partir de la partie crochet (22) ; et
la partie crochet (22) raccordant le bras de charge (24) au bras de blocage (26) de sorte que le bras de charge (24) et le bras de blocage (26) s'étendent à partir de la partie crochet (22) ;
le corps en une seule pièce ayant une configuration ouverte dans laquelle le bras de charge (24) et le bras de blocage (26) définissent une ouverture (30) pour l'introduction du câble caténaire (80) dans la partie crochet (22) ;
le corps en une seule pièce ayant une configuration fermée dans laquelle le bras de blocage (26) entre en prise avec le bras de charge (24) pour fermer la partie crochet (22) autour du câble caténaire (80) ; et
dans laquelle la partie crochet (22) est conçue pour supporter la pince (20) relativement au câble caténaire (80) de sorte que le câble caténaire (80) soit placé contre la partie crochet (22), pour supporter un objet suspendu au bras de charge (24) relativement au câble caténaire (80) ; et
dans laquelle le corps en une seule pièce comprend un doigt (62) qui s'étend dans une partie intérieure de la partie crochet (22), le doigt (62) étant conçu pour être poussé dans le câble caténaire (80), afin d'assujettir le câble caténaire (80) à l'intérieur de la partie crochet (22), lorsque le corps en une seule pièce est déplacé de la configuration ouverte à la configuration fermée.

2. Pince selon la revendication 1, dans laquelle, lorsque le corps en une seule pièce se trouve dans la configuration fermée, le doigt (62) s'étend au-delà d'un périmètre extérieur du câble caténaire (80) et assujettit la pince (20) de sorte qu'elle ne puisse pas glisser le long du câble caténaire (80) lorsque le corps en une seule pièce se trouve dans la configuration fermée.

3. Pince selon la revendication 1 ou la revendication 2, dans laquelle le doigt (62) est un premier doigt (62) ; et
dans laquelle le corps en une seule pièce comprend, en outre, un second doigt (60) qui s'étend à partir du bras de charge (24), le second doigt (60) étant conçu pour être poussé dans le câble caténaire (80), afin d'assujettir le câble caténaire (80) à l'intérieur de la partie crochet (22), lorsque le corps en une seule pièce est déplacé de la configuration ouverte à la configuration fermée ; et
éventuellement ou de préférence, dans laquelle le premier doigt (62) s'étend à partir du bras de blocage (26) et le second doigt (60) s'étend à partir du bras de charge (24).

4. Pince selon la revendication 3, dans laquelle les premier et second doigts (62, 60) sont conçus pour entrer en prise avec le câble caténaire (80) en alignement circonférentiel l'un par rapport à l'autre.

5. Pince selon l'une ou l'autre des revendications 3 et 4, dans laquelle au moins un des premier et second doigts (62, 60) s'étend dans la partie crochet (22), afin d'assujettir le câble caténaire (80) à l'intérieur de la partie crochet (22) lorsque le corps en une seule pièce se trouve dans la configuration ouverte.

6. Pince selon la revendication 5, dans laquelle les premier et second doigts (62, 60) s'étendent dans la partie crochet (22) depuis des côtés opposés de la partie crochet (22).

7. Pince selon l'une quelconque des revendications précédentes, dans laquelle le bras de blocage (26) comprend une partie élastique (46) s'étendant à partir de la partie crochet (22) et une partie de blocage (48) s'étendant de manière oblique relativement à la partie élastique (46), la partie de blocage (48) étant conçue pour entrer en prise avec le bras de charge (24) afin d'assujettir le corps en une seule pièce dans la configuration fermée, et
éventuellement ou de préférence, dans laquelle un élément de mise en prise de bras de blocage est formé sur la partie de blocage (48) de façon à faire corps avec celle-ci et est conçue pour entrer en prise avec un élément de mise en prise de bras de charge qui est formé sur le bras de charge (24) de façon à faire corps avec celui-ci, afin d'assujettir le corps en une seule pièce dans la configuration fermée.

8. Pince selon la revendication 7, dans laquelle l'élément de mise en prise de bras de blocage comprend une ouverture de bras de blocage (52) dans la partie de blocage (48) du bras de blocage (26) ; et
dans laquelle l'élément de mise en prise de bras de charge comprend une saillie de bras de charge (44) qui est conçue pour s'étendre dans l'ouverture de bras de blocage (52) afin d'assujettir le corps en une seule pièce dans la configuration fermée.

9. Pince selon la revendication 8, dans laquelle la saillie de bras de charge (44) est réalisée sous la forme d'une languette qui s'étend dans une ouverture de bras de charge (42) dans le bras de charge (24) ; et
dans laquelle au moins une portion de la partie de blocage (48) du bras de blocage (26) s'étend à travers l'ouverture de bras de charge (42) lorsque le corps en une seule pièce se trouve dans la configuration fermée.

10. Pince selon l'une quelconque des revendications précédentes, dans laquelle le corps en une seule pièce est conçu pour être dégagé à partir de la configuration fermée sans utiliser d'outils, et
éventuellement ou de préférence, dans laquelle le bras de blocage comprend une extrémité oblique (50) conçue pour être manipulée pour dégager la saillie de bras de charge (44) de l'ouverture de bras de blocage (52) .

11. Pince selon l'une quelconque des revendications précédentes, dans laquelle le bras de blocage (26) s'étend sensiblement parallèlement au bras de charge (24) lorsque le corps en une seule pièce se trouve dans la configuration fermée ; et
dans laquelle le corps en une seule pièce est conçu de façon à ce qu'on le fasse glisser manuellement le long du câble caténaire (80) lorsqu'il se trouve dans la configuration ouverte, et est conçu pour être assujetti de façon à ne pas pouvoir glisser le long du câble caténaire (80) lorsqu'il se trouve dans la configuration fermée.

12. Pince selon l'une quelconque des revendications précédentes, dans laquelle la partie crochet (22) est située à une première extrémité de la pince (20) et le bras de charge (24) s'étend de telle sorte qu'il s'éloigne de la première extrémité en direction d'une seconde extrémité opposée de la pince (20) ; et
la pince (20) comprenant un élément d'attache (40) au niveau de la seconde extrémité du bras de charge (24) pour y attacher l'objet ;
éventuellement ou de préférence, la partie crochet (22) est composée de bandes parallèles (32) raccordées à chacun du bras de charge (24) et du bras de blocage (26).

13. Pince selon la revendication 12, dans laquelle le bras de blocage (26) entre en prise avec le bras de charge (24) à un emplacement entre la partie crochet (22) et l'élément d'attache (40).

14. Procédé d'assujettissement d'un objet à un câble caténaire (80) au moyen d'une ou de plusieurs pinces (20), chacune desdites pinces (20) comprenant un corps en une seule pièce, le corps en une seule pièce comprenant une partie crochet (22) qui est conçue pour recevoir le câble caténaire (80), un bras de charge (24) qui s'étend à partir de la partie crochet (22) pour la mise en prise de l'objet et un bras de blocage (26) qui s'étend à partir de la partie crochet (22) en regard du bras de charge (24), le procédé comprenant, pour la ou chacune des pinces :
insérer le câble caténaire (80) dans la partie crochet (22) par une ouverture (30) formée entre le bras de charge (24) et le bras de blocage (26) de telle sorte que le câble caténaire (80) soit placé dans la partie crochet (22) ;
solliciter manuellement le bras de blocage (26) et le bras de charge (24) l'un vers l'autre afin de disposer le corps en une seule pièce dans une configuration fermée dans laquelle la partie crochet (22) est fermée autour du câble caténaire (80) de sorte que le corps en une seule pièce ne peut être retiré du câble caténaire (80) ; et
suspendre l'objet au bras de charge (24) de telle sorte que le câble caténaire (80) soutienne l'objet par le biais de la partie crochet (22) de la pince (20) ;
dans lequel le fait de solliciter manuellement le corps en une seule pièce pour lui faire adopter la configuration fermée se traduit par le fait qu'au moins un doigt (62) du corps en une seule pièce est poussé dans le câble caténaire (80), à l'intérieur de la partie crochet (22), afin d'assujettir la pince (20) de façon à ce qu'elle ne puisse pas glisser axialement le long du câble caténaire (80).
